# EUROPÄISCHE PATENTSCHRIFT

(11) **EP 1 798 158 B1**
(45) Veröffentlichungstag und Bekanntmachung des Hinweises auf die Patenterteilung: **21.01.2009**
(21) Anmeldenummer: 06007070.3
(22) Anmeldetag: 03.04.2006
(51) Int. Cl.: B65D 63/10, F16B 13/08

(54) **Spannsystem zum Abspannen von gegenüberliegenden Kartonwänden im Inneren eines Kartons**
Tightening system to hold together opposite walls of a package within the package
Système de tendeur pour tendre entre elles les parois opposées d'un carton à l'intérieur du carton

(30) Priorität: 13.12.2005 DE 202005019632 U
(43) Veröffentlichungstag der Anmeldung: 20.06.2007
(73) Patentinhaber: Bächle, Dieter, 8592 Uttwil/Bodensee (CH)
(72) Erfinder: Bächle, Dieter, 8592 Uttwil/Bodensee (CH)
(74) Vertreter: Nüsse, Stephan

(56) Entgegenhaltungen:
- WO-A-01/62113
- FR-A- 1 248 748
- US-A1- 3 938 587
- US-A1- 4 617 702

## Beschreibung

Die Erfindung betrifft ein Spannsystem nach dem Oberbegriff des Anspruches 1.

Ein Spannsystem der eingangs genannten Art ist der Schrift zu US 4,617,702 zu entnehmen. Diese offenbart einen streifenartigen Flachstrang mit rechteckigem Rinnenquerschnitt aus polymerem Werkstoff; in den Rinnenquerschnitt ist ein Zahngrund eingeformt, dessen die Längsachse querende Zahnstreifen sich zwischen den Rinnenlängsrändern erstrecken. Zudem ist einends ein Tellerkopf angeformt; das andere Strangende ist zungenartig ausgebildet. Auf dieses freie Ende kann ein zweiter Tellerkopf mit entsprechend gezahntem mittigem Durchbruch aufgeschoben und durch die beiden erwähnten, ineinander greifenden Zahnkomponenten festgelegt werden. Diese Vorrichtung dient der Verbindung einander zwischen den Tellerköpfen zuzuordnender Gegenstände.

Ebenfalls erfasst die WO 01/62113 A1 einen solchen Flachstrang mit einem angeformten sowie einem aufzuschiebenden und auf ihm festzulegenden Tellerkopf.

Die Verbindung eines Ölkühlkörpers mit einem Radiator, die flächig aneinander liegen, zeigt die US 3,938,587. Ein Spannstrang mit einends angeformtem Tellerkopf durchsetzt Kanäle beider Elemente, und das aus dem Ölkühlkörper ragende freie Ende des mit Querrillen versehenen Spannstranges nimmt einen zweiten Tellerkopf mit mittigem Durchbruch auf; in diesen ragen Blattfedern, die in Fixierstellung in eine der Querrillen eingreifen.

Im Transportwesen ist es üblich, die Kosten zum Transport von Transportgütern nach einer von den Transportgütern beanspruchten Grundfläche anzusetzen. Um Kosten beim Transport möglichst gering zu halten, ist es wünschenswert, Transportgüter möglichst hoch zu stapeln. Um dies zu erreichen, ist je nach Gewicht der anfallenden Transportgüter ein entsprechend stabiler Karton vorzusehen. Oftmals handelt es sich jedoch um Transportgüter, die, beispielsweise als leichtes Schüttgut, nur ein geringes Gewicht aufweisen. Der Boden eines Kartons ist im Vergleich zu den Seitenwänden relativ stabil. Die obengenannte Verwendung eines stabilen Kartons, d.h., insbesondere mit stabilen Seitenwänden, auch für leichtere Transportgüter ist deshalb ineffektiv und kostenaufwändig.

Dieses Problem kann durch die Verwendung möglichst leichter Kartons gelöst werden. Diese erweisen sich beim Stapeln jedoch oft als nicht formstabil. Bei einer vollen Befüllung derselben beulen die leichten Kartons seitlich aus und lassen sich insbesondere nicht mehr effektiv nebeneinander stapeln.

Wünschenswert wäre eine Vorrichtung einfacher Handhabbarkeit zur Stabilisierung eines Behälters aus Kartonwerkstoff.

An dieser Stelle setzt die Erfindung an, deren Aufgabe es ist, ein Spannsystem zum Abspannen von gegenüberliegenden Kartonwänden in einem Karton anzugeben, das sich als gleichermaßen effektiv und sicher anwendbar erweist.

Zur Lösung der Aufgabe ist zum Abspannen von gegenüberliegenden Kartonwänden in einem Karton der zweite Spannanker im gespannten Zustand des Spannsystems unter Beibehaltung der Spannung von einer Seite her auf dem Spannstrang arretierbar, und dieser weist vor dem als Spitze ausgebildeten freien Ende einen Arretierbereich auf; der zweite Spannanker ist im Arretierbereich lösbar am Spannstrang befestigbar.

Erfindungsgemäß ist ein Spannanker in Form eines Spanntellers gebildet. Dies gewährleistet die flächige Auflage eines Spannankers und die Verteilung der Spannkraft auf eine möglichst große Fläche. Damit ist eine Arretierung des Spannankers auch bei besonders dünnwandigen Kartonwänden möglich.

Die Erfindung geht von der Überlegung aus, dass das Spannsystem für einen flüssigen Bewegungsablauf zum Abspannen von gegenüberliegenden Kartonwänden geeignet sein sollte. Mit anderen Worten, die Erfindung hat erkannt, dass beim Anbringen des Spannsystems möglichst effektiv eine Verankerung des Spannsystems erfolgen sollte, das Durchbohren der Kartonwände erfolgen sollte und das Festlegen der Spannung ebenfalls möglichst einfach realisierbar sein sollte - dies möglichst in einer Bewegung. Gemäß dieser Überlegung ist bei dem Spannsystem entsprechend dem Konzept der Erfindung eine dem ersten Spannanker gegenüberliegende Spitze vorgesehen. Diese kann in besonders einfacher Weise genutzt werden, um mit der von Hand geführten Spitze ein Loch in eine erste Kartonwand zu bohren und gleichzeitig, ähnlich wie bei einer Nadel, die Spitze mit dem daran angeformten Spannstrang, ähnlich eines Fadens, durch das Loch hindurch zur gegenüberliegenden Kartonwand zu führen. Gemäß der Überlegung der Erfindung wird die Spitze dort wiederum besonders einfach genutzt, um ein zweites Loch, dieses Mal in der gegenüberliegenden Kartonwand, zu bohren, die Spitze hindurchzuführen und auf der äußeren Seite der Kartonwand das Spannsystems so lange zu ziehen, bis der erste Spannanker an der ersten Kartonwand festgelegt ist. Gemäß dem Konzept der vorliegenden Erfindung kann nunmehr zwischen der Spitze und dem ersten Spannanker der zweite Spannanker lösbar auf dem Spannstrang unter Beibehaltung der Spannung, gegebenenfalls indem der Anwender die gegenüberliegende Kartonwand zurückdrückt, arretiert werden. Zweckmäßigerweise wird der zweite Spannanker auf der Außenseite des Kartons auf dem Spannstrang arretiert.

Das Spannsystem gemäß dem Konzept der Erfindung kommt somit ohne aufwändige Maßnahmen wie das Bilden von Schraub- oder Ösenverbindungen oder Knoten oder Schraub-/Mutterverbindungen oder ähnlichem aus, sondern nutzt im Wesentlichen bereits das Hindurchführen des Spannstranges von der ersten Kartonwand zur gegenüberliegenden Kartonwand, um das Spannsystem zu verankern, unter Spannung zu setzen und zu arretieren.

Die Erfindung macht es möglich, anstatt schwerer Kartons vermehrt leichte Kartons zu nutzen und damit anfallende Transportkosten, insbesondere für vergleichsweise geringgewichtige Transportgüter, zu senken. In der Regel erweist sich auch bei dünnen Kartons ein Kartonboden als ausreichend tragfähig.

Weiterbildungen der Erfindung sind den Unteransprüchen zu entnehmen, auch geben im Einzelnen vorteilhafte Möglichkeiten an das Konzept der Erfindung im Rahmen der Aufgabenstellung und hinsichtlich weiterer Vorteile zu realisieren

Vorzugsweise ist der Spitze ein Griffbereich, insbesondere ein Griffbereich mit Taille vorgelagert. Der Spannstrang ist dadurch besonders einfach handhabbar.

Zweckmäßigerweise weist der Spannstrang vor der Spitze, insbesondere vor dem Griffbereich einen Arretierbereich auf, in dem der zweite Spannanker lösbar am Spannstrang befestigbar ist. Der Arretierbereich ermöglicht vorteilhaft das Befestigen des zweiten Spannankers ohne Knoten oder Schraub-/Mutterverbindungen.

Vorzugsweise weist der zweite Spannanker, insbesondere Spannteller, einen radial verlaufenden Schlitz auf, der in einem mittigen Loch mündet, wobei die Mündung in Form einer Taille gebildet ist. Dies hat den Vorteil, dass der zweite Spannanker mit dem radial verlaufenden Schlitz einfach von der Seite her auf den Spannstrang gesteckt werden kann.

Vorzugsweise weist der Arretierbereich des Spannstranges ein Rastsystem auf. Insbesondere kann dies in Form einer gezahnten Strangumfangsfläche gebildet sein. In diesem Zusammenhang hat es sich als besonders vorteilhaft erwiesen, dass die Strangumfangsfläche um einen Kernstrang herum angeordnete, gegen eine Spannrichtung kegelig abgestützte, radial ausgerichtete Anschlagflächen aufweist. Ein solches Rastsystem lässt sich besonders einfach durch plastische Formgebungsverfahren im Bereich der Kunststoffindustrie herstellen.

Vorzugsweise weist eine vorgenannte Taille des zweiten Spannankers einen geringfügig kleineren Durchmesser als der Kernstrang auf. Nach Aufschieben des zweiten Spannankers lässt sich dieser unter Überwindung eines Schwelldruckes mittig auf dem Spannstrang einrasten.

Vorzugsweise ist der Spannstrang mit Spitze, Griffbereich, Arretierbereich und Rastsystem und dem ersten Spannanker einstückig gebildet. Das genannte Spannsystem lässt sich im Rahmen der Kunststoffindustrie somit besonders leicht als zweiteiliges. Set aus dem Spannstrang mit Spitze, Griffbereich, Arretierbereich, Rastsystem und ersten Spannanker einerseits sowie dem zweiten Spannanker andererseits zur Verfügung stellen.

Vorzugsweise übersteigt der größte Durchmesser des Spannstranges einen Durchmesser eines durch die Spitze in einer Kartonwand erzeugbaren Loches nicht. Dies garantiert das möglichst reibungslose Durchführen des Spannstranges durch das von der Spitze erzeugte Loch.

Die Erfindung führt auch auf einen Karton mit einem oder mehreren Spannsystemen der oben erläuterten Art.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zu zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen.

Die Figuren der Zeichnung zeigen im Einzelnen in:
- Fig. 1:: eine perspektivische Ansicht eines Kartons und dessen Innenraum mit einem Spannsystem gemäß einer bevorzugten Ausführungsform der Erfindung;
- Fig. 2:: eine Ansicht von oben auf den Karton und dessen Innenraum gemäß Fig. 1;
- Fig. 3:: die Seitenansicht (A) auf den Karton mit einem ersten Spannanker gemäß der bevorzugten Ausführungsform der Erfindung und die Draufsicht (B) auf den ersten Spannanker;
- Fig. 4:: eine Seitenansicht (A) auf den Karton mit einem zweiten Spannanker gemäß der bevorzugten Ausführungsform der Erfindung und die Draufsicht (B) auf den zweiten Spannanker;
- Fig. 5:: eine perspektivische Ansicht des Griffbereiches, eines Teiles des Arretierbereiches und des zweiten Spannankers in arretiertem Zustand beim Spannsystem gemäß der bevorzugten Ausführungsform der Erfindung;
- Fig. 6:: die Teile des Spannsystems der Fig. 5 nach Abtrennen eines Griffbereiches und eines überstehenden Arretierungsbereiches bei einem Spannsystem gemäß der bevorzugten Ausführungsform;
- Fig. 7:: eine Draufsicht auf das gesamte Spannsystem, wie es im angebrachten Zustand bei einem Karton der Fig. 1 gezeigt ist;
- Fig. 8:: die Vergrößerung des Ausschnittes C von Fig. 7.

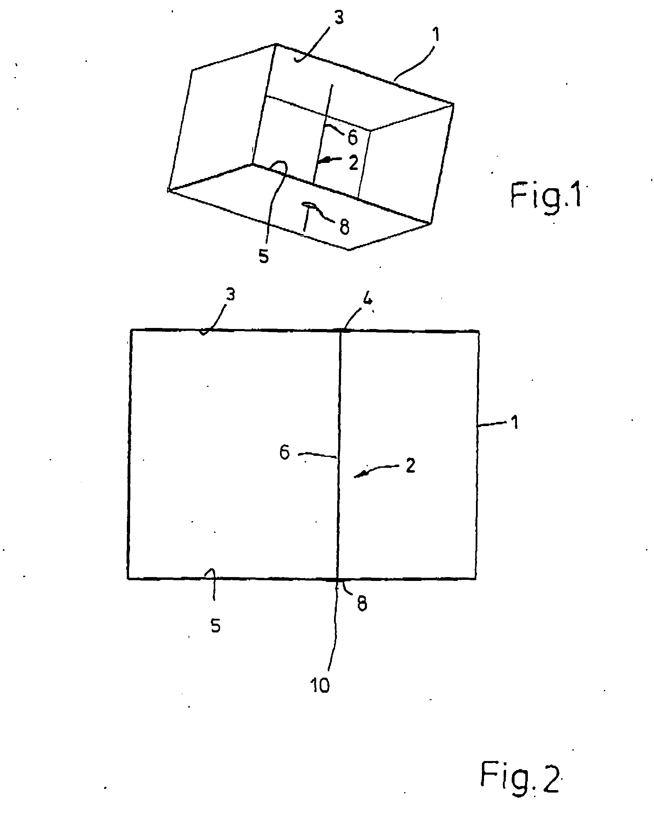

Fig. 1 zeigt einen Karton 1 mit einem Spannsystem 2, das in Bezug auf die folgenden Fig. 2 bis Fig. 8 näher erläutert ist. Dieses Spannsystem 2 zum Abspannen der gegenüberliegenden Kartonwände 3, 5 des Kartons 1 weist gemäß Fig. 2 einen ersten Spannanker 4, einen Spannstrang 6 und einen zweiten Spannanker 8 auf. Der Spannstrang 6 ist mit einer im angespannten Zustand einer dem ersten Spannanker 4 gegenüberliegenden Spitze 10 versehen, zwischen der und dem ersten Spannanker 4 der zweite Spannanker 8 lösbar auf dem Spannstrang 6 unter Beibehaltung der Spannung arretierbar ist. Die Spitze 10 mit Griffbereich 22 und einem Teil 30' eines Arretierbereichs 30 ist danach einfach entfernbar.

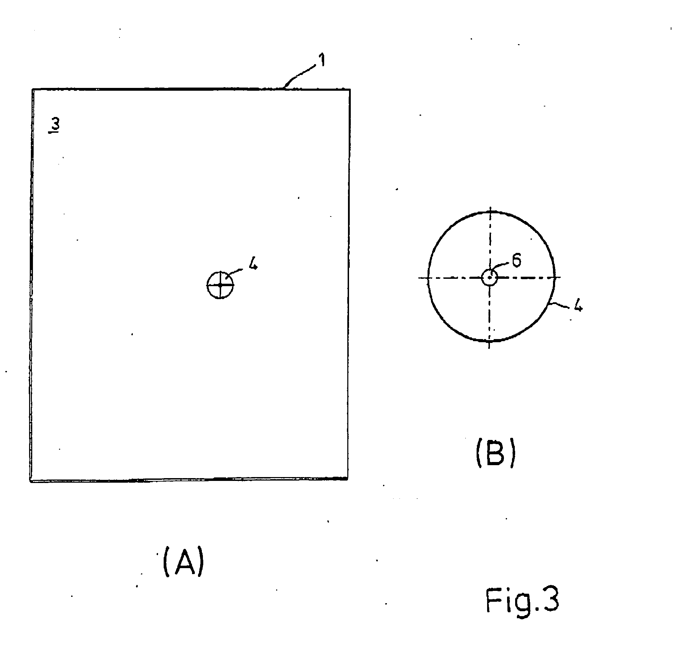

Fig. 3 zeigt als Seiten- oder Außenansicht (A) des Kartons 1 die Kartonseitenwand 3. Dabei ist von außen der als flacher Spannteller ausgebildete erste Spannanker 4 zu erkennen, der in Ansicht (B) vergrößert dargestellt ist. Der erste Spannanker 4 weist neben der flachen tellerförmigen Ausformung einen mittigen Ansatz auf, an den der Spannstrang 6 angeformt ist.

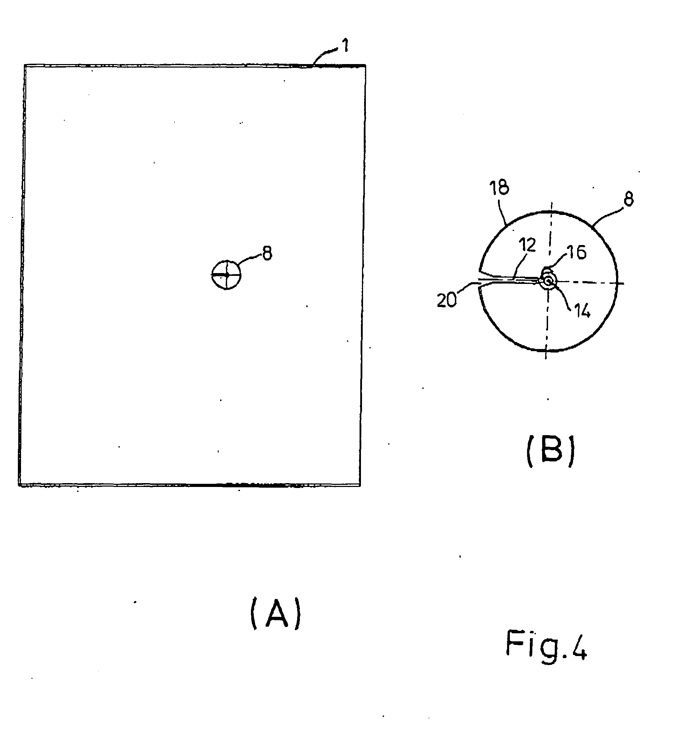

Fig. 4 zeigt den Karton 1 in einer Seitenansicht (A), wobei die Kartonwand 5 von außen gezeigt ist. Dabei ist der zweite Spannanker 8 eingezeichnet, der ebenfalls in Form eines Spanntellers ausgebildet ist. Der zweite tellerförmige Spannanker 8 ist in Ansicht (B) von Fig. 4 näher dargestellt und weist einen radial verlaufenden Schlitz 12 auf. Der Schlitz 12 mündet einerseits in einer einem mittigen Loch 14 vorgelagerten Taille 16 und weist andererseits eine zum Umfang 18 des Spannankers 8 hin sich öffnende Aufweitung 20 auf.

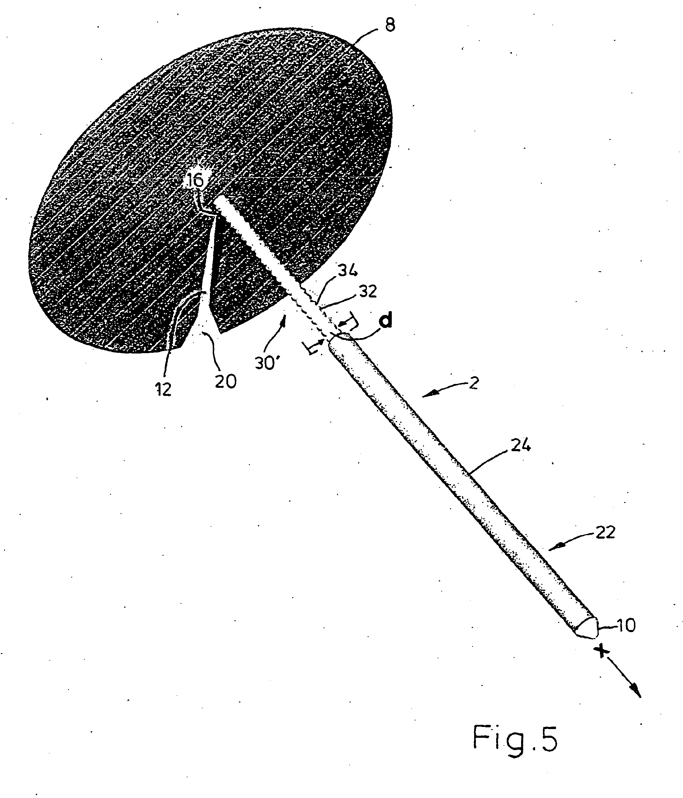

Wie anhand Fig. 5 ersichtlich, wird das Spannsystem 2 mit der Spitze 10 zuvor an einer beliebigen Stelle, wie sie in Fig. 3, Ansicht (A), zu sehen ist, durch die Kartonwand 3 des Kartons 1 in Spannrichtung gezogen. Dadurch werden die zwei gegenüberliegenden Kartonwände 3, 5 des Kartons 1 in stabilisierender Weise mit dem Spannsystem 2 gegeneinander gezogen. Um ein entsprechendes Loch in der Kartonwand 3 zu erzeugen, ist die Spitze 10 in noch zu erläuternder Weise ausgeführt. Das Spannsystem 2 wird durch das Loch gezogen, bis der Spannanker 4 in Form eines Spanntellers gegen die Kartonwand 3 - wie in Fig. 2 zu sehen - anschlägt. Das auf eine bestimmte Breite eines Kartons 1 ausgelegte Spannsystem 2 wird dazu auch mit der Spitze 10 durch die zweite Kartonwand 5 gestoßen. Danach wird, gegebenenfalls unter Druck auf die Kartonwand 5, der Spannstrang 6 angezogen, um die Kartonwände 3 und 5 gegeneinander zu ziehen. Ist die nötige Spannung erreicht, wird der zweite Spannanker 8 an geeigneter Stelle des Spannstranges 6 mit der Aufweitung 20 und dem dieser folgenden Schlitz 12 über den Spannstrang 6 geschoben und schließlich mit dem mittigen Loch 14 auf dem Spannstrang 6 arretiert. Dabei wird der zweite Spannanker 8 über den Widerstand der Taille 16 hinaus auf den Spannstrang 6 geschoben und ist so gegen ein seitliches Lösen gesichert.

Anhand der Fig. 5 bis Fig. 8 wird im Einzelnen die Arretierung des zweiten Spannankers 8 auf dem Spannsystem 2 erläutert.

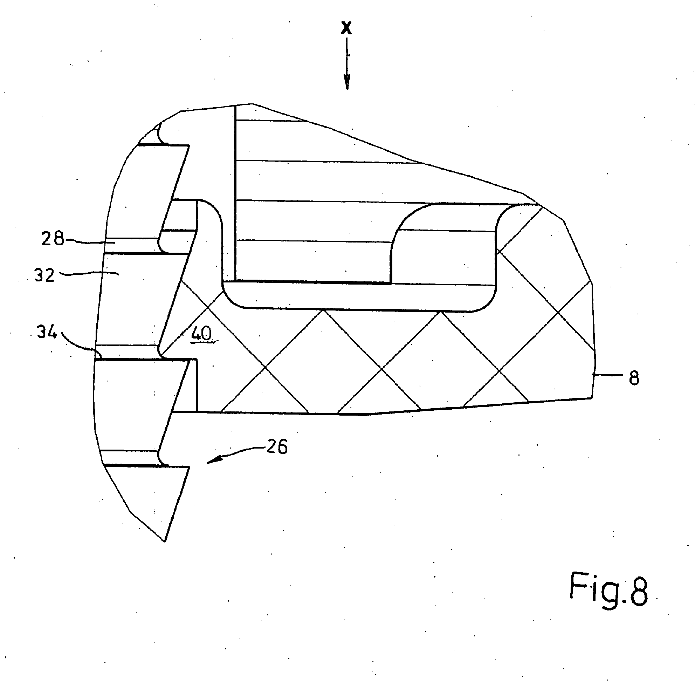

Fig. 5 zeigt das überstehende Ende des Spannsystems 2 außerhalb des Kartons 1 jenseits der Kartonwand 5; es sind die Spitze 10 des Spannsystems 2, der der Spitze 10 vorgelagerte Griffbereich 22 mit Taille 24 sowie der dem Griff vorgelagerte Teil 30' des Arretierbereiches 30 gezeigt, zudem in perspektivischer Darstellung der mit der Aufweitung 20 zuvor und dem nachfolgenden Schlitz 12 auf den Arretierbereich 30 geschobene zweite Spannanker 8 in Form eines Spanntellers. Der zweite Spannanker 8 ist aufgrund der Taille 16 gegen ein seitliches Lösen vom Arretierbereich 30 gesichert. Die Taille 16 weist dazu einen geringförmig geringeren Durchmesser als der Kerndurchmesser d des Arretierbereiches 30' auf. Im übrigen ist der Arretierbereich 30' dadurch gebildet, dass, wie in Fig. 8 im Detail gezeigt, die Strangumfangsfläche um einen Kernstrang 28 herum angeordnete, mit Kegeln 32 abgestützte radial ausgerichtete Anschlagflächen 34 aufweist. Das mittige Loch 14 des zweiten Spannankers 8 weist einen Durchmesser auf, der geringer als der Durchmesser der Anschlagflächen 34 ist und somit gegen ein axiales Verschieben aufgrund der gegen den zweiten Spannanker 8 drückenden Kartonwand 5 gehalten ist.

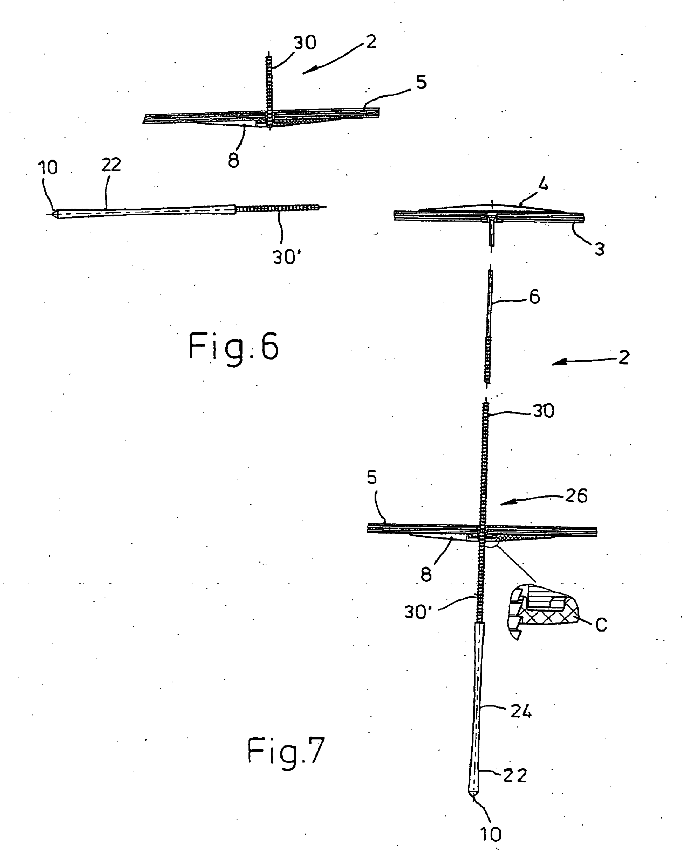

Fig. 7 zeigt in Draufsicht den Endzustand des am Karton 1 angebrachten Spannsystems 2 unmittelbar nach Arretierung des zweiten Spannankers 8. Der überstehende Arretierbereich 30' sowie der Griffbereich 22 mit Spitze 10 wird, wie in Fig. 6 gezeigt, einfach an geeigneter Stelle hinter dem zweiten Spannanker 8 abgebrochen. Da zwischen den Kegeln 32 und den Anschlagflächen 34 der Kerndurchmesser am geringsten ist und auf diese Weise praktisch Sollbruchstellen definiert sind, ist dies problemlos möglich.

Bei der in Fig. 7 gezeigten Ausführungsform tragen die als Teller ausgebildeten Spannanker 4, 8 kaum auf der Außenseite einer Kartonwand 3, 5 auf, so dass ein Karton 1 ohne Probleme eng benachbart zu anderen Kartons gestapelt werden kann. Durch das Spannsystem 2 sind Ausbeulungen der Kartonwände 3, 5 vermieden. Obwohl vorliegend ein dünnwandiger Karton 1 verwendet wird, kann er mit vergleichsweise schwerem Transportgut voll befüllt und/oder mehrfach gestapelt werden. Das Spannsystem 2 stabilisiert die Seitenwände 3, 5 in ausreichender Weise.

Fig. 8 zeigt die bereits anhand von Fig. 5 erläuterten Kegel 32 und die radial ausgerichteten Anschlagflächen 34, die entlang der Strangumfangsfläche als Rastsystem 26 um einen Kernstrang 28 herum angeordnet sind. Gegen eine der Anschlagflächen 34 rastet eine Kante 40 des zweiten Spann-oder Zugankers 8 ein. Der Zuganker 8 wird durch die nach außen drückende Kartonwand 5 entlang des Pfeiles x gegen die Anschlagfläche 40 gedrückt, welche den Zuganker 8 gegen ein axiales Weiterrutschen hält.

Zum Lösen des Spannsystems 2 kann der Spann- oder Zuganker 8 leicht vom Arretierbereich 30 abgezogen werden. Dazu wird der Zuganker 8 über den Druckpunkt der Taille 16 hinweg seitlich abgezogen. Danach kann, wie aus Fig. 1 oder Fig. 7 ersichtlich ist, das Spannsystem 2 aus dem Kartoninnenraum entfernt werden, indem das Spannsystem 2 am ersten Zuganker 4 ergriffen und aus den Löchern in den Karton- oder Seitenwänden 3, 5 abgezogen wird.

Zusammenfassend sieht die Erfindung zur Stabilisierung von Kartonwänden 3, 5 ein Spannsystem 2 zum Abspannen von gegenüberliegenden Kartonwänden 3, 5 im Inneren eines Kartons 1 vor, das einen ersten Spannanker 4, einen Spannstrang 6 und einen zweiten Spannanker 4 aufweist, wobei der Spannstrang 6 im gespannten Zustand eine dem ersten Spannanker 4 gegenüberliegende Spitze 10 aufweist und zwischen der Spitze 10 und dem ersten Spannanker 4 der zweite Spannanker 4 lösbar auf dem Spannstrang 6 unter Beibehaltung der Spannung arretierbar ist. Das Spannsystem 2 ermöglicht eine problemlose Handhabung bei Kartonwänden 3, 5 unterschiedlicher Wanddicken und somit für Innen - und Außenmasse.

## Patentansprüche

1. Spannsystem (2), das einen Spannstrang (6) mit einem endwärtigen festliegenden tellerartigen ersten Spannanker (4) sowie einem gegenüberliegenden freien Ende aufweist, wobei zwischen diesem und dem ersten Spannanker ein zweiter Spannanker (8) lösbar auf dem Spannstrang arretierbar ist,
**dadurch gekennzeichnet,**
**dass** zum Abspannen von gegenüberliegenden Kartonwänden (3, 5) in einem Karton (1) der zweite Spannanker (8) im gespannten Zustand des Spannsystems (2) unter Beibehaltung der Spannung von einer Seite her auf dem Spannstrang (6) arretierbar ist und dieser vor dem als Spitze (10) ausgebildeten freien Ende einen Arretierbereich (30, 30') aufweist und der zweite Spannanker im Arretierbereich lösbar am Spannstrang (6) befestigbar ist.

2. Spannsystem nach Anspruch 1, **dadurch gekennzeichnet, dass** der zweite Spannanker (8) einen radial verlaufenden Schlitz (12) aufweist, der in einem mittigen Loch (14) mündet, wobei die Mündung in Form einer Taille (16) gebildet ist.

3. Spannsystem nach Anspruch 1 oder 2, **dadurch gekennzeichnet, dass** der Arretierbereich (30, 30') ein Rastsystem (26) aufweist.

4. Spannsystem nach Anspruch 3, **dadurch gekennzeichnet, dass** das Rastsystem (26) in Form einer gezahnten Strang-Umfangsfläche gebildet ist.

5. Spannsystem nach Anspruch 4, **dadurch gekennzeichnet, dass** die Strang-Umfangsfläche um einen Kernstrang (28) herum angeordnete gegen eine Spannrichtung (x) durch Kegel (32) abgestützte, radial ausgerichtete Anschlagflächen (34) aufweist.

6. Spannsystem nach einem der Ansprüche 1 bis 5, **dadurch gekennzeichnet, dass** eine Taille (16) des zweiten Spannankers (8) einen geringfügig kleineren Durchmesser als der Kernstrang (28) aufweist.

7. Spannsystem nach einem der Ansprüche 1 bis 6, **dadurch gekennzeichnet, dass** vor der Spitze (10) ein Griffbereich (22), insbesondere ein Griffbereich mit Taille (24) und vor diesem der Arretierbereich (30, 30') geringeren Durchmessers (d) angeordnet ist.

8. Spannsystem nach einem der Ansprüche 1 bis 7, **dadurch gekennzeichnet, dass** der Spannstrang (6) mit Spitze (10), Griffbereich (22), Arretierbereich (30, 30') und Rastsystem (26) und dem ersten Spannanker (4) einstückig gebildet ist.

9. Spannsystem nach einem der Ansprüche 1 bis 8, **dadurch gekennzeichnet, dass** der größte Durchmesser des Spannstrangs (6) einen Durchmesser eines durch die Spitze (10) in einer Kartonwand (3, 5) erzeugbaren Loches (14) nicht übersteigt.

10. Karton (1) mit einem Spannsystem (2) nach einem der vorhergehenden Ansprüche.

## Claims

1. Tightening system (2) which has a tightening rod (6) have a terminal fixed plate-like first tightening anchor (4) and a free end opposite, wherein between the latter and the first tightening anchor a second tightening anchor (8) can be locked releasably on the tightening rod, **characterised in that**, to brace opposite box walls (3, 5), inside a cardboard box (1) the second tightening anchor (8) in the tightened state of the tightening system (2) can be locked on the tightening rod (6) from one side while retaining the tension, and in front of the free end designed as a point (10) the tightening rod (6) has a locking region (30, 30') and the second tightening anchor in the locking region can be releasably attached to the tightening rod (6).

2. Tightening system according to claim 1, **characterised in that** the second tightening anchor (8) has a radially extending slot (12) which opens out in a central hole (14), the opening being in the form of a throat (16).

3. Tightening system according to claim 1 or 2, **characterised in that** the locking region (30, 30') has a latch system (26).

4. Tightening system according to claim 3, **characterised in that** the latch system (26) is in the form of a toothed surface surrounding the rod.

5. Tightening system according to claim 4, **characterised in that** the surface surrounding the rod has radially oriented stop faces (34) arranged round a core rod (28) and supported by cones (32) against a direction of tightening (x).

6. Tightening system according to any of claims 1 to 5, **characterised in that** a throat (16) of the second tightening anchor (8) has a slightly smaller diameter than the core rod (28).

7. Tightening system according to any of claims 1 to 6, **characterised in that** in front of the point (10) is arranged a gripping region (22), in particular a gripping region with throat (24), and in front of the latter is arranged the locking region (30, 30') of smaller diameter (d).

8. Tightening system according to any of claims 1 to 7, **characterised in that** the tightening rod (6) is formed in one piece with point (10), gripping region (22), locking region (30, 30') and latch system (26) and the first tightening anchor (4).

9. Tightening system according to any of claims 1 to 8, **characterised in that** the largest diameter of the tightening rod (6) does not exceed a diameter of a hole (14) that can be produced in a box wall (3, 5) by the point (10).

10. Cardboard box (1) having a tightening system (2) according to any of the preceding claims.

## Revendications

1. Système de mise en contrainte (2), qui présente une tige de mise en contrainte (6) avec une première ancre de mise en contrainte (4) fixe d'extrémité et en forme de plaque, ainsi qu'une extrémité opposée libre, une deuxième ancre de mise en contrainte (8) étant fixée de manière à pouvoir être bloquée sur la tige de mise en contrainte entre l'extrémité libre et la première ancre de mise en contrainte, **caractérisé en ce que**, pour détendre des parois opposées de carton (3, 5) dans un carton (1), la deuxième ancre de mise en contrainte (8) est apte à être verrouillée depuis un côté, dans un état tendu du système de mise en contrainte (2), sur la tige de mise en contrainte (6) tout en conservant la contrainte, **en ce que** la tige de mise en contrainte comporte une zone de verrouillage (30, 30') devant l'extrémité libre réalisée sous la forme d'une pointe (10), et **en ce que** la deuxième ancre de mise en contrainte est apte à être fixée de manière détachable à la tige de mise en contrainte, dans la zone de verrouillage (30, 30').

2. Système de mise en contrainte selon la revendication 1, **caractérisé en ce que** la deuxième ancre de mise en contrainte (8) comporte une fente (12) s'étendant radialement, qui débouche dans un trou (14) central, le débouché étant réalisé sous la forme d'un col (16).

3. Système de mise en contrainte selon la revendication 1 ou 2, **caractérisé en ce que** la zone de verrouillage (30, 30') comporte un system à cran d'arrêt (26).

4. Système de mise en contrainte selon la revendication 3, **caractérisé en ce que** le système à cran d'arrêt (26) est réalisé sous la forme d'une surface circonférentielle de tige dentée.

5. Système de mise en contrainte selon la revendication 4, **caractérisé en ce que** la surface circonférentielle de la tige comporte des surfaces de butée (34) agencées autour d'une tige de noyau (28), qui prennent appui contre une direction de mise en contrainte (x) au travers d'un cône (32) et qui sont orientées radialement.

6. Système de mise en contrainte selon l'une des revendications 1 à 5, **caractérisé en ce qu'**un col (16) de la deuxième ancre de mise en contrainte (8) présente un diamètre légèrement plus petit que la tige de noyau (28).

7. Système de mise en contrainte selon l'une des revendications 1 à 6, **caractérisé en ce qu'**une zone de saisie (22), en particulier une zone de saisie avec un col (24), est agencée devant la pointe (10), et **en ce que** la zone de verrouillage (30, 30') de diamètre réduit (d) est agencée devant la zone de saisie.

8. Système de mise en contrainte selon l'une des revendications 1 à 7, **caractérisé en ce que** la tige de mise en contrainte (6) est formée en un seul morceau avec la pointe (10), la zone de saisie (22), la zone de verrouillage (30, 30') et le système à cran d'arrêt (26) et la première ancre de mise en contrainte (4).

9. Système de mise en contrainte selon l'une des revendications 1 à 8, **caractérisé en ce que** le plus grand diamètre de la ligne de mise en contrainte (6) n'est pas supérieur à un diamètre d'un trou (14) réalisable dans une paroi du carton (3, 5) par la pointe (10).

10. Carton (1) avec un système de mise en contrainte (2) selon l'une des revendications précédentes.
